# EUROPEAN PATENT APPLICATION

(11) **EP 0 926 440 A1**
(43) Date of publication of application: **30.06.1999**
(21) Application number: 97939179.4
(22) Date of filing: 05.09.1997
(51) Int. Cl.: F23G 5/00, F23G 5/04, F23G 5/16, F23G 5/20, F23G 5/46

(54) **INCINERATOR**

(30) Priority: 07.09.1996 JP 27283796; 09.09.1996 JP 27391096; 07.10.1996 JP 30078096; 09.10.1996 JP 30344496
(71) Applicant: Equa Co., Ltd., Gunma 379-0127 (JP)
(72) Inventor: FUTATSUGI, Takehiko, Annaka-shi, Gunma 379-01 (JP)
(74) Representative: Bergen, Klaus, Dipl.-Ing.
(86) International application number: PCT/JP97/03114
(87) International publication number: WO 98/10223

(57) **Abstract**

An incinerator (machine) composing a drying chamber (9), a decomposing chamber (12), a combusting chamber (25), a catalytic converter (35), a water vapor condenser (38) and a heat utilising apparatus (40) which are integrated such that combustion air flows along the inside (19) of an insulated exterior wall (54) and a counter flow heat exchange is effected between the air containing dust, and the ash and exhaust gas, wherein base is mixed to burn wastes. Most of the constituent elements may be incorporated in a rotating body. The temperature of exhaust gas is close to the room temperature, and a scrubber can be directly connected or integrated. The discharge of pollutants can be reduced to a very low level. No auxiliary fuel other than the fuel for the initial heating and the pilot light for maintaining the flame is needed to burn even wastes having a water content of 90 % or greater. It is possible to deal with various types of wastes and to adopt various types of incinerators.

## Description

### Technical Field

The invention is a garbage/waste/dust/trash (Waste) incinerator made as a machine comprising a drying chamber (Drier), a decomposing chamber (Decomposer), a combusting chamber (Fire room), a catalytic converter (Converter) and a water vapor condensor (Condensor) which are so integrated that a counter flow heat exchange is effected between Outgoings and Incomings, wherein base is mixed with Waste. (Where Outgoings means exhaust gas (Exhaust) and the ashes (Ash); Incomings means combustion air (Air) and Waste.)
The machine demands a quite small amount of auxiliary fuel.
The emission of pollutants can be reduced to a very low level.
It is possible to deal with various types of Waste.
Most of the constituent elements may be incorporated in a rotating body.
The temperature of Exhaust is close to the room temperature.
A scrubber can be directly connected or integrated.

### Background Art

Waste incineration is indispensable in industry for reducing the weight of Waste and extinguishing the danger of fire, pathogenic organs, and toxic organic compounds.
In addition to harmful or toxic compounds (pollutants) which exist in Waste from first and remain after combustion such as arsenic, heavy metals and radioactive substances, pollutants are also produced in incineration even when Waste includes no pollutants.
Incineration producing pollutants are today causing problems.
While a rotating reactor and incinerating with lime are adopted, however, effective results can not be obtained.

Waste needs oxygen (O₂) in burning. Only 1/5 of the air being O₂, 1 ton dried Waste consumes 15 tons (11, 000m ³) Air in incineration.
Main thermal substances in incineration are water (H₂ O), Air and Exhaust.
Exhaust temperature is usually as high as 600-1500° C.
Heat of vaporization of H₂ O (latent heat) and heat which is used for heating Exhaust (sensible heat) are wasted into the atmosphere.
The latent heat has a large amount of energy. The total combustion heat (higher heat value) is therefore distinguished from one except the latent heat of H₂ O (lower heat value). Living organisms use higher heat value, but, popular burning uses lower heat value only.
While H₂ O is not only produced in burning, but also included in Waste. Latent heats of both cases are wasted.
In raw garbage incineration, therefore, consumed auxiliary fuel becomes as much as 2 - 5 times of Waste in weight. And 10 times auxiliary fuel is consumed to result cinders including raw parts in the incineration of the Waste which include 80 - 90 % H₂ O such as sewerage dreg cake, beancurd refuse and wasted tofu beancurd. Like these, extraordinary amount of auxiliary fuel is consumed in Waste incineration.

Heat recycle arts are described.
Let Air and Exhaust have equal heat capacity, flow in sufficiently long pipes and Exhaust be hot and Air cold at each intake. When the two pipes are so contacted along the whole length that both outlet meet and both intake meet, Exhaust and Air come out of the average temperature from the outlet. This manner is called parallel flow heat exchange (PF).
On the other hand, when the pipes are so contacted that each intake meets the other's outlet, then each outlet temperature becomes of the other's intake. This method is called a counter flow heat exchange (CF).
CF has been tried in the dilute fuel combustion.

Kotani, Y. et al. :20th Symp. (Intn'l) on Combust. 2050, (1984).
Takeno, T. and Y. Kotani:"Research on Effective Use of Energy"

SPEY 14, 263 (1985).
The above data are quoted in "NENSHO NETSUKOGAKU" p15, editted by Kagaku Kogaku Kyokai, published by MAKI SHOTEN.
The higher temperature Air is used, the diluter fuel can be ignited. And in dilute combustion, nitrogen oxides NOx, carbon monooxide CO, soot, etc. can be reduced, and efficiency of energy transformation rate is improved. These cases were trials of fuel and H₂ O vavor in the exaust was not condensed to liquid. Waste incineration is much more difficult than proper fuel combustion, because Waste includes much H₂ O, remains ash or residuals, produces pollutants easily, includes many nonvolatile or solids, has various shapes or includes various matters. Therefore, it has been considered impossible in Waste incineration to use high technic which is hard even in fuel combustion.

Pollutants can be classified into inevitables (A's) and evitables (B's).
A's include carbon dioxide CO₂ and nitrogen oxides NOx.
While main flammable components of Waste are generally organic compounds, Waste incineration produces CO₂ and H₂O. CO₂ is little harmful, but a man dies in high concentration. Since CO₂ is one of grobal greenhouse effect materials, the reduction of its emission is demanded. While auxiliary fuel also produces CO₂, its reduction is necessary adding to saving natural resources.
While CO₂ produced by Waste itself is ineviable, CO₂ produced by auxiliary fuel is evitable and much more undesirable.
Plastics are mixed in Waste incineration to reduse auxiliary fuel. It is however worried about producing pollutants such as dioxines.
Electric generation exploiting the wasted heat of Waste incineration is recommended. Saving auxiliary fuel is more effective today.
NOx is produced only if the air is heated. NOx has a characteristics that the formation enthalpy is positive and is decomposed by catalyst.
A catalytic converter of a car utilizes this fact.
NOx is hardly produced in imcomplete combustion and reduced when complete combustion gas (oxidizing flame) is mixed with imcomplete combustion gas (reducing flame).

B's are subclassifled into nonflammables (BY) and flammables (BZ).
BY includes halogen, hydrogen halides, NOx, sulfur oxides SOx, phosphorus oxides POx and fly Ash.
BZ includes organic compounds, carbon, CO, ammonia NH₃, hydrogen cyanide HCN, hydrogen sulfide H₂ S and sulfur. Organic compounds include organo halogen compounds ( OX) , amines, nitriles, mercaptans, hydrocarbons, alcohols, aldehydes, organo acid and soot.
BZ become A's or BY in complete combustion.
However, BZ such as OX can not be easily combusted completely.
The pharmacopoeia mentions Oxygen flask combustion method to measure the quantity of and/or identificate halogen or sulphur included in organic compounds;
- JP: : Oxygen Flask Combustion Method
- USP: : Oxygen Flask Combustion
- BP: : Oxygen-flask Combustion
- EP&IP: : Oxygen-flask Method
- FP: : Matalloides (Dosage des) bans les Composes Organiques apres Combustion dens l'Oxygen (Br, Cl, F, I, P, S)
Organics is set with a filter paper in a platinum (Pt) basket and is burned in pure O₂ atmosphare and the quantity of acid gas such as hydrogen chloride HCl produced in combustion is measured.
Even very difficult substance to flame such as OX can be completely burned in good condition such as existing Pt catalyst and pure O₂.
If additional Air is applied in order to combust completely, additional auxiliary fuel is also demanded for the sensible heat.
A economical point of view demands imcomplete but nearly complete combustion.
Dioxines is a kind of OX produced when organic compound is combined with chlorine element in scorching process such as in burning of OX such as vinyl chloride.
Halogen elements and halogen compounds which vaporize in a incinerator are called Volatile halogen. OX decompose thermaly above 180° C to give Volatile halogen such as HCl or Cl₂. Aluminium chloride AlCl₃ (b. p. 183° C) is also a kind of volatile halogen. Volatile halogen makes organic compounds into OX.
Producing of dioxines can be observed even in the incineration of Waste which includes no OX, when volatile halogens are produced.
Carbon reacts with hydrogen to produce organic compounds at high temperatures. Even if OX are decomposed thermaly, decomposed productions reform OX again.
Volatile substances condense in the neighborhood cooler than its boiling point.
OX are volatile at Fire room temperature. But OX can not easily vaporize in Waste clusters/blocks or Waste buried in Ash. They remain there or condense there, while the raw parts of Waste have low temperature. Thereafter, OX remove to Ash when raw parts burnt out and Ash becomes cool lacking flammables. This is the mechanism of remaining dioxines in the burned out Ash. Indeed NOx are produced only if Air exists, NOx are produced much more in buring of Waste including nitrogen element (N).
Therefore, NOx and BY make a group called Y's.
The Waste, which produce Y's, include characteristic elements (N, F, Cl, Br, I, S, P, etc.), which are called Y elements. Waste including N produce NOx in the complete combustion produce BZ (amine, ammonia, and hydrogen cyanide) in imcomplete combustion. Y's are acid gases, therefore they can be removed by alkaline aqueous solution in the scrubber. But the scrubber can neither be directly connected nor integrated because high temperature Exhaust boiles the solution.

Combustion is a kind of chemical reaction and raw materials react to produce productions (positive reaction). At the same time, productions react to produce raw materials (negative reaction). The both reactions become fast at high temperature. Negative reaction can hardly occurr when productions are removed. Such reaction art is called disproportionation, as the negative reaction is restrained by production reduction. While gases react very fast, liquids rather slow, solids very slow. For example, gas burns explosively, charcoal and coke are burning for a long time. If a part of productions becomes solids, which do neither vavorize nor melt nor decompose, then negative reaction can hardly occurr. It is also a type of disproportionation.
It is difficult to reduce the negative reaction to 1/10 by reaction temperature variation, however, it is easy to make it less than 1/1, 000 using disproportionation.
Here we consider such materials (Base) as react with Y's easily to yield harmless solid compounds (salts) which do neither vaporize nor melt nor decompose even at high temperatures of Fire room. Base make Y's harmless.
Metals, oxides, hydroxides, carbonates, metal hydrides, organo acid salts, alcohlates and organometallic compounds, which include alkali metals (K, Na, etc.) or alkaline earth metals (Ca, Mg, etc.), are the examples of Base.
Y's disproportionation using Base is called neutralize fixation.

The total valence number of Base element per Y element in the reaction is called a ratio of stoichiometry. The valence of alkali metals is 1 and the that of the alkaline earth metals 2. The ratios of stoichiometry of N, halogen, S and P are 1, 1, 2 and 3, respectively. The ratio of stoichiometry of N "1" is only practical under 300° C, because its salts decompose above that. Halogen salts such as KCl and CaCl₂ so melt under the combustion temperature, that the ratio of stoichiometry of halogens is practically "1" only under the temperature.
However oxides make their melting points higher, the ratio of stoichiometry of halogens can practically be "2".

### Disclosure of Invention

The following guide line is made to reduce the emmision of pollutants.
(1) Auxiliary fuel is used only to heat up the machine initially and to maintain the flame (called micro-fuel).
(2) Heat energy for combustion and pollution-controle must be obtained from the recycling of the latent heat and the sensible heat.
(3) Making a good condition like the Oxygen flask combustion method of Pharmacopoeia and utilizing disproportionation.
(4) Making the best use of wasted heat, if possible.
(5) Ineviable pollutants (A's) must be reduced.
Micro-fuel leads CO₂ to the minimum emission. (2) leads to drying Waste, heating enough amount of Air for complete combustion, keeping the temperatures of the intake of Converter and making Exhaust close to the room temperature. Combination of (1) and (2) achieves (5). Since Waste are combusted with enough amount of high temperature Air, flammable pollutants BZ are not produced (3). The scrubber can be directly connected because of room temperature Exhaust, therefore nonflammable pollutants Y's are removed.

Along the guide line, the heat exchange is described first.
Both Air + Waste (including Base) (Incomings) and Exhaust + Ash (including remained Base) (Outgoings) include the same elements and have the same mass. If elements and mass are same, then the heat capacity of the smaller molecules becomes bigger. Therefore, Outgoings have bigger heat capacity than Incomings. So that, using CF, Air temperature can become close to the Fire room well temperature. Namely;
- Outgoings' heat suffices Air to be heated up to the temperature as high as that of Fire room wall.
- Waste can be dried only by the Outgoings' heat.
Therefore micro-fuel can be achieved, only if the temperature of the Fire room wall is high enough. The difference of the heat capacities between Incomings and Outgoings can be ignored, when the amount of Air is more than two times of stoichiometry (more than 10 % O₂ in Exhaust) or the fraction of H₂O or Ash component is high. In fact, Exhaust temperature is calculated 90° C in the case of plastic Waste, Fire room wall 1000° C, the room temperature 25° C and remaining O₂ 10 %. In this case, the scrubber solution does not boil even if the scrubber is directly connected. Namely;
- Exhaust temperature can be close to the room temperature.
- The scrubber can be directly connected or integrated.

Such conditions are described as Fire room wall temperature becomes high enough functioning heat exchanger.
The combustion temperature becomes the highest when the amount of Air is a little shorter than the amount of stoichiometry. O₂ is insufficient for complite combustion in this condition. When the combustion temperature is high, then Waste are well decomposed and the combustion goes well. Air must be so shared that Air is nearly the stoichiometry in the center of Fire room.
Since heat conducts from Fire room to atmosphere in the heat insulator, the heat insulator acts the heat conductor.
Coefficient of heat transfer becomes thermal conductivity / thickness of heat conductor (heat transfer length).
Conductive product is conduction area × coefficient of heat transfer.
The product indicates the ability of the heat exchange.
A machine is so designed that conductive product is large enough in the heat exchanger, making conduction area large and the heat conductor thin. All parts in a machine (Waste transportor, ember transporter, Ash transporter, ceramics fixing plates, scrubber wall, connecting points or area of parts and the others) must be so designed that they act heat conducting fins (heat radiating fins, heat accepting fins) or heat reflecting fins and conduction area becomes large, paying an attention not to enlarge the gas flow resistance.
Air pipes in Exhaust enlarge conductive area, too.
In low temperature zone including Condenser, diameters must be large and many or large heat fins are arranged for the exchange of big heat of condensation. But the thermal conductivity of liquid H₂ O, which is about twenty times of Air, moderate the condition. Large surface of the high temperature zone (hot zone) cools Fire room, increasing conductive product.

Fire room must be as small as possible and so must be hot zone arround there.

All hot zone should be surrounded by Air ducts, and the radiation must be reflected by heat reflecters before all windows except the intake of Converter, where must be hot, and whole body must be wrapped with thick heat insulators. The heat energy in Fire room (higher heat value + the recycled heat) equals to the emission heat (emitted directly from the outer wall of Fire room to the atmosphere) + the transferred heat (heat of outgoings).
And the transferred heat equals the recycled heat (recovered as the heat of Air and Waste to Fire room) + the not recycled heat (not recovered to Fire room). The not recycled heat includes the heat which is harvested by the heat utilizing apparatus (Utilizer). Since both heat capacities of Incomings and Outgoings are almost equal, the not recycled heat becomes almost same with the harvested heat by Utilizer. The harvested heat must be not so large that the combustion temperature becomes too low.
Therefore, the emission heat equals higher heat value - the not recycled heat. Fire room wall temperature is (the emission heat / conductive product) + external wall temperature. The combustion temperature becomes 100-500 ° C higher than that of Fire room wall (inside). When higher heat value is larger than the not recycled heat, the reduction of conductive product can make the Fire room wall temperature high. Higher heat value is larger than the lower heat value of dried Waste. Namely;
- Even wet Waste can burn almost the same temperature as dry one.

A machine has rotating parts and surface that can be 50-80° C. These dangerous areas are covered by protective walls whose inside acts external air ducts. Sucking this external air by ventilators, leaked gas and heat can be returned to the machine.
The accumulation of such small devices lead to big effect.
Hereby the heat exchange rate and Fire room wall temperature can be high.

There are such Waste as is difficult to flame even if dried, becuse their higher heat is almost zero, or as includes H₂ O too much to get the necessary conductive product value.
Regretwise, a little more auxiliary fuel is demanded in these cases.

Most of the purpose of incineration of Waste is the reduction of Waste's weight.

It indicates that the amount of Ash or the heat capacity of Ash can be ignored.

Namely, in the most case of Waste, Ash can be ignored in heat exchange calculation. Once pollution-controle and Micro-fuel are achieved, a machine is so recommended to design that manufacturing cost down and the handling convenience have priority over a small variation of the rate of the wasted heat utilization.

Base and neutralize fixation are described, next.
The most suitable Bases are oxides, hydroxides and carbonates. And these of alkaline earth metals are suitable for the invention because the porosity of Converter is less damaged by them. Calcium compounds i. e. quick lime (calcium oxide CaO), slaked lime (calcium hydroxide Ca (OH) ₂) and limestone powder (calcium carbonate CaCO₃) are the most economical among them. In Fire room, Ca (OH)₂ produces H₂O and CaCO₃ produces CO₂.
CaCO₃ gives CO₂, indeed, both CaO and Ca (OH)₂ are produced baking CaCO₃ and emitting CO₂. CaCO₃ has advantage in CO₂ produced by baking fuel from the global point of view. CaO has a problem of safety. CaO and CaCO₃ are dificult to obtain fine powder. Ca (OH)₂ has advantage in these points.

Each Y element shows its personality in neutralize fixation.
Above 180° C, OX decompose thermally and give volatile halogen, which react with Base. Since the halogen salts melt at high temperature, neutralize fixation is effective only under 700° C. Therefore, the stages of the fixation are before Fire room and in Exhaust (in Converter, Condenser and the scrubber). In Fire room, organic material burns and are reduced. If there is only little organic material, then volatile chlorine can hardly react with it to produce organo chlorides in the reverse reaction. Concerning S, since decomposed materials such as sulfur or hydrogen sulfide react not easily with Base, a star of the neutralize fixation is SOx, who is produced when they are burned. The high light scene is Fire room and he/she continues action in Exhaust. The neutralize fixation of N is only effective in Exhaust under 300° C. However, NOx ia a oxydizing agent and help BZ to vanish. After maintaining NOx in moderate concentration using the oxidizing flame and reducing flame mixture art and the catalytic effect in Fire room, NOx is removed in Converter, Condenser and the scrubber.

Catalyst is described next.
Exhaust from Fire room is passed through the secondary combusting chamber i. e. Converter where such ceramics are settled as include oxides or oxoacid salts or double oxides of silicon and/or aluminium and/or zirconium as main components. These ceramics acts catalyst like Pt over 600° C. Catalyst adsorbs such molecules on its surface as gases, O₂, SOx, Cl₂ and compress them to high pressure. Therefore even such material can burn well as is difficult to burn or as is too dilute to flame in the air. The larger surface ceramics has, the more effective it acts. So that such porous ceramics must be used as have large suface. Here mentioned porous includes both microscopic and macroscopic (such as fibrous, of sintering, thin plates, foamed/ballooned, small pipes and complex compounds of them) Ceramics must has such shapes having Air passages to nimize the flow resistance, as lumps or blocks, honeycomb, plates, cloth, and like cotton wool. And ceramics can improved its effect when catalysts are charged such as Pt, Pd, ZnO₂, chromium oxides, iron oxides, nickel oxides, cobalt oxides, manganese oxides and so on, which are developed by the chemical engineering or as catalysts in a catalytic converter of a car. The mixing minerals which include such catalystic material can be effective, too. Pt and like have effects of acceleration of burning, oxidation, and decomposition even at room temperatur when they are charged in the low temperature zone (lower than 50 0° C). However, ceramics itself has the same effect with Pt and like when the intake of Converter is kept over 600° C, more rigorously 700° C. When Air is heated up to over 300° C, the combustion acceleration effect of a machine becomes recognizable and the fumes produced by burning of rubber products, etc. are disappeared. ZrO₂ and like have specially a good effect to decompose NOx and make it to thermal equilibrium concentration. Therefore, such materials must be used not only in Converter but also on Fire room wall, as castable, fire cement, etc., which include ZrO₂ and fixe or reinforce the ceramics. Converter make BZ burn, NOx decompose, Y's higher oxides and particles stay there by filtration effect. Soot particles burn out when they are stayed in the O₂ existing high temperature area. Converter acts a neutralize fixater when Base particles are assembled there. The more oxygen atomes Y's molecular has (the higher oxided Y's is ), the more easily it dissolved in H₂ O and the stronger acid it becomes. Therefore, varying Y's higher oxides improves the efficiency of the scrubber. Namely, Converter improves pollution controling effect of Condensor and the scrubber. The combination of BZ burning out and neutalize fixation has a large effect to remove OX, too. Before entering Converter, OX is almost disappeared by neutralize fixation and good combustion condition in Fire room. When a small amount of OX decomposes thermally to give halogens and organic compounds in Converter, halogens are neutralized and fixed and organic compounds are burned out. Both productions are disappeared and the reverse reaction can not be occurred. This means that Converter is extremely good apparatus to remove OX. NOx becomes the equilibrium concentration depending on the temperature by the catalysts. The lower the temperature is, the lower the equilibrium concentration becomes and the longer time is needed to achieve the equilibrium. NOx concentration becomes low in shorter time, when the temperatures of the intake and the outlet of Converter are made high and low, respectively.

The combination of Converter and the sufficient amount of the high temperature Air which includes NOx obtained by heat recycle can be substituted for pure O₂ and Pt basket described in pharmacopoeia.

The water vapor condensation is described.
Water vapor arising from the moisture of Waste dilutes O₂ and disturbs the complete combustion. If water vapor is discharged by Exhaust fan, the same volume of Air can not be absorbed. A water vapor condensor acts a pump of the decreasing volume from gas to liquid. Absolute O₂ quantity for the combustion can be kept independent of the moisture of the Waste, when water vapor is condensed or removed before discharge. Condenser has roles not only to send the heat for drying wet Waste to Drier, but also to help the combustion concerning O₂. O₂ changes into the same mole of CO₂ in combustion. Both the Air and Exhaust have almost the room temperatur. Therefore both Air and Exhaust have almost the same volume. This condition makes the design and establishment of ventilators and Exhaust fan easier. Since thermal conductivity of H₂ O is 20 times of the air, the ability of heat exchange using H₂ O is increased. When H₂O vapor is condensed, H₂O catchs harmful acid gases Y's and removes them, similar to that rain removes smog. However the condensed H₂ O is strong acid, pH is about 2, which corrode the materials of a machine. In order to avoid the corrosion, it must be neutralized by the alkaline scrubber solution. The scrubber solution, which is warmed by Exhaust, warms Waste and its drying is accelerated. The integration of the scrubber to the machine can increase the efficiency more, like this. But it is better the machine specially for dry Waste has an independent scrubber because of the small effect of the integration. The ability of absorption of acid gases in the condenser is increased because the condensed water is neutralized by the alkaline scrubber solution. The removal of acid gases directly after Converter by Condenser and the scrubber decreases Ys concentration in Converter. Thus the OX controling ability of Converter is increased. Since Condenser and the scrubber can act wet type Air cleaners, dust particles in Exhaust are removed here. Base particles as fly ash are also catched here and utilized again in the scrubber.

About Ash in a machine are described.
When Ash makes the flow resistance large, a ventilator specially for Ash (Ash ventilator) is used, so that the shortage of hot Air for Ash must be prevented.
The more embers/cinder burn out, the less flammables exist and the more difficult it is for embers to bum. Fresh hot Air is made to flow in the reverse direction of the motion of Ash. Then the more embers burn out, the fresher hot Air they face. So that embers can burn completely- At the same time the volatile pollutants are vaporized and blown back to Fire room and they are prevented to remain in Ash. When Ash stays long time in high temperature (more than 650° C), it becomes dense and tractable. If Waste are in lumps/clusters or dumpling, exposed by insufficient Air or not maintained in high temperature until burn out, volatile pollutions such as dioxines remain in Ash. In order to prevent the forming of waste lumps, Waste must be cut and crushed to small size before the incineration. The cascade steps are made in Fire room to stay embers in Air long time and to expose them to Air. A rotary kiln is positively adopted to drop, turn over or make upside down Waste/embers repeatedly, except the case of the Waste which include no halogen or leave little ash. Namely, Waste and embers are kept hot, exposed to Air, divested of cooler place and faced fresh hot Air till burn out, so that volatile materials do not remain in Ash.

The flows of Air and Waste is described.
The air inside the protective wall is inhaled by ventilators and flows from the cool area to the hot area, namely outside of the scrubber, Condenser and Converter, into Fire room, and Air becomes almost Fire room wall temperature.

The route where Air flows is called Air duct.
Exhaust is cooled in Converter, in Condenser (where H₂ O is condensed), out of Utilizer and in the scrubber, and measured O₂ concentration, and discharged to the atomosphere by a Exhaust fan. The route where Exhaust flows is called Exhaust duct.
The rate of introducing of Waste and Air and discharging of Exhaust are so regulated that O₂ concentration in Exhaust is kept more than 10 %. However O₂ concentration can be regulated lower than 10 % in cases that H₂ O content of Waste is very high or that the production of pollutants is little. O₂ may not measured at all time when the property of the Waste is constant. Then a machine may be set or designed using caluculated or empirical O₂ values.
Exhaust fan must have larger capacity than ventilators. The air in the Waste storage tank is inhaled with bad smell into the Waste tube by the capacity of Exhaust fan + Condenser pumping - ventilators. This Air helps Waste to dry and water vapor and volatile matter to be transported and acts partly-combustion air in Decomposer. Because Exhaust side (scrubber side) has lower pressure than the side of atmosphere, Air and Waste, the leakage of Exhaust and the condenser/scrubber solution through seal/gaskets or open windows/leaks are prevented . Dangerous area has lower pressure than the safety area. In the case using a rotary kiln which needs to seal up, short tubes or doughnuts are formed by 2-5 sheets of ceramic cloth such as glass or kaorin. The one side of them is attached to fixed body and another side is let through the rotataing body and pressed by the loosely tensioned ceramic or glass thread/yarn/string. The tubes or the doughnuts are sewn with the thread to prevent comming loose and coated by grease to prevent the leakage of gas or water. Such simple sealing can work, becuse serious leakage is prevented. After Waste are cut to small, crushed and mixed with Base, they are quantitatively supplied into Drier. The amount of Base must be more than the ratio of the stoichiometry (usually 1.3 ∼ 2 times of that). NaOH or KOH is usually used as Base of the scrubber because they are well dissolved in H₂ O. Ash including no pollutant from a machine can be used as Base for the scrubber, too. There are such Waste as are sticky, melt before burning, produce bad smelles mixed with Base. There are some type of a machine in which Base is difficult to be made fly ash. In such case a machine has Base introducer (s) that introduce all or part of Base powder into the machine. Base powder prevent Waste from sticking. Base powder becomes fly ash easily. Waste are supplied into Fire room through Drier and Decomposer. The rout where Waste moves through is called Waste tube.

In Drier Waste is dried by the heat from the scrubber solution, condensed H₂O and Exhaust. However dry Waste need not to be dried (Drier is unnecessary). In Deoomposer Waste obtain heat, decompose thermally and burn partly. If Waste include components which have low volatile temperature and low flash point, flames can spread out not only in Decomposer but also in Drier and the explosive combustion can be happened repeatedly. In order to avoid the matter, Waste tube must have narrowed necks in Drier, in Decomposer and/or the boundaries of them. Decomposer acts the neutralize fixator of OX, too.

In Fire room, a pilot light heats up initially and maintains flame. The light can be extinguished when the temperature is higher than autoignition point (Air is hotter than 650° C) and the combustion heat of `Waste can keep the temperature. Such pilot light is selected as has an igniter and burns with Air in Fire room . Air must be so supplied that Air arround the light can keep enough.

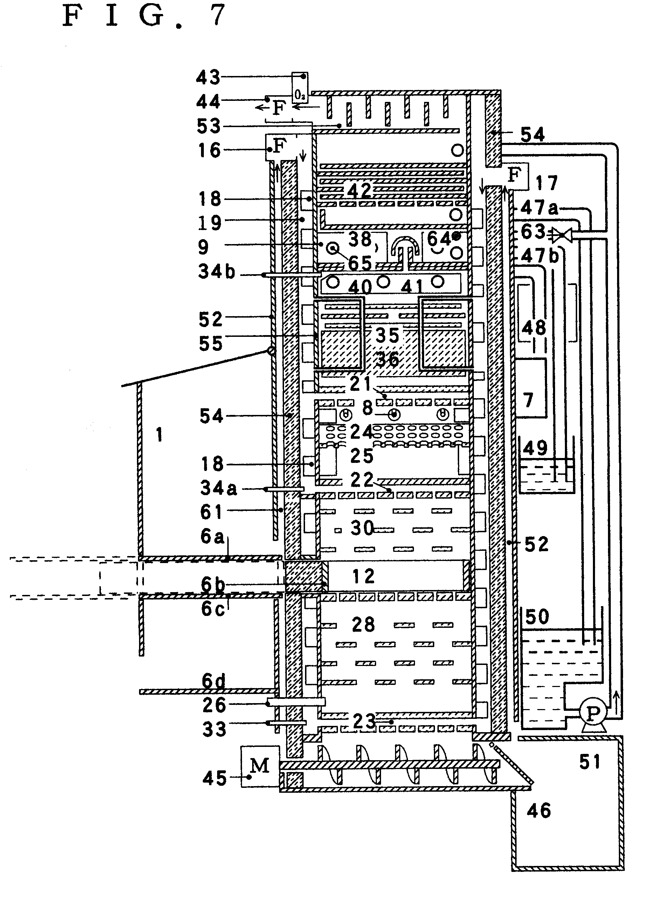

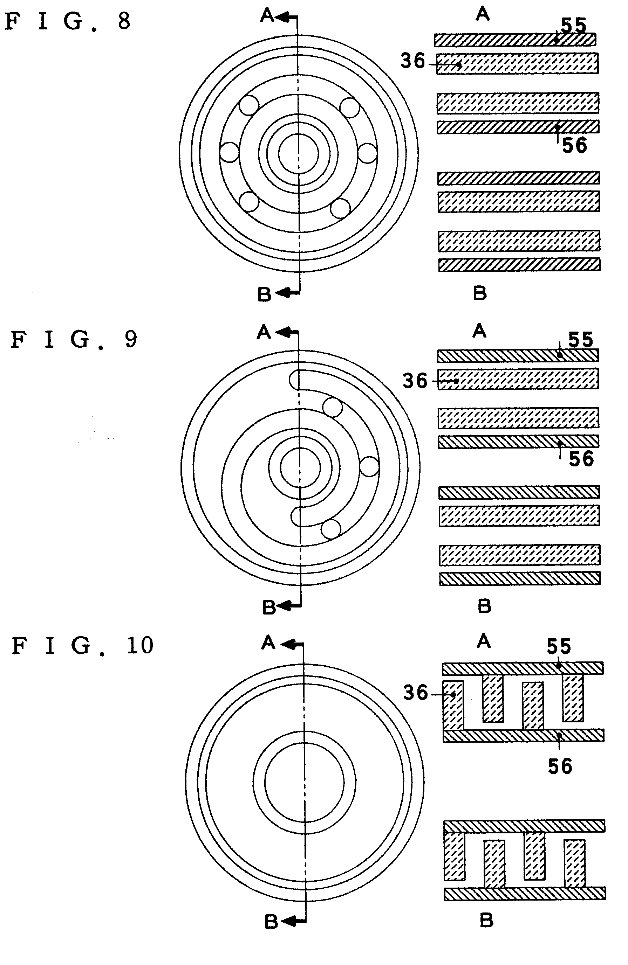

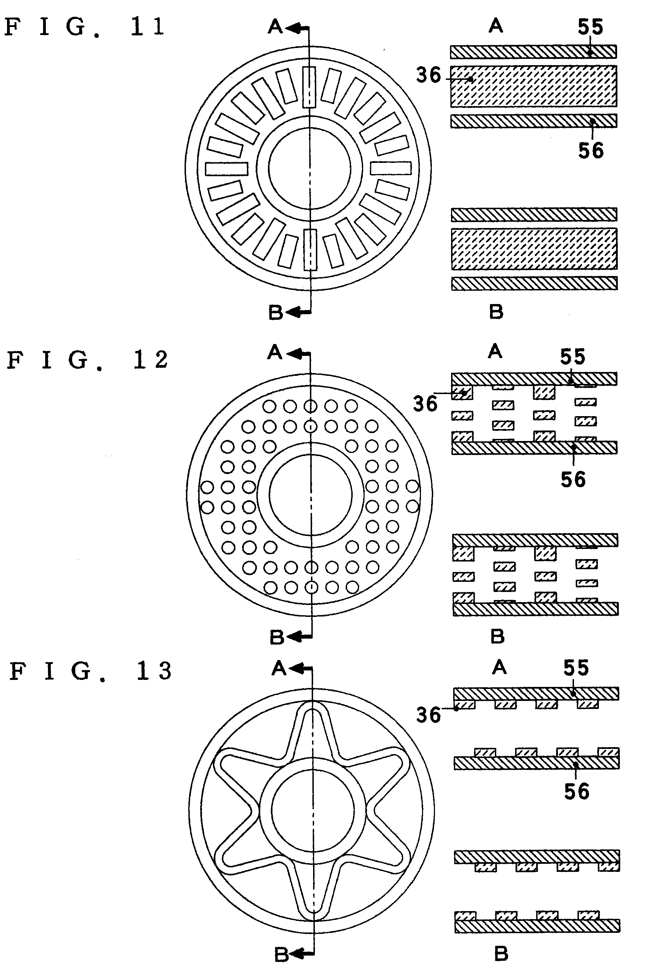

Since the light needs only small amount of fuel, O₂ concentration is not widely lowered and Waste are not blown away to the outlet like by a strong burner which is used in conventional methods.
ZrO₂ included in the refractory material of Fire room wall make NOx close to the heat equilibrium concentration at Fire room wall temperature. Reducing flame is mixed in Fire room with the oxidizing flame in order to restrain the concentration of NOx. Fire room acts the neutralize fixater of SOx, so that Base must be made fly ash there. In Fire room, the organic compounds are so reduced that OX is prevented from the reproduction, too. The neutralize fixation of halogens works but only like appendix.
Plural Air suppliers in the chamer make the center high in temperature. Enough O₂ must be supplied in order to combust completely except into the hottest part in Fire room . The intake side of Converter is kept high in temperature and the outlet side low. Since porous ceramics is a good heat insulater, the temperature gradient is easily attained by cooling the outlet. It is advantageous to the reduction of the conductive product of Fire room. It must be payed attention that too incomplete combustion in Fire room increases the combustion in Converter so that Converter becomes hotter than Fire room. In such a case the porosity of ceramics is dammaged and the cooling of the outlet becomes imcomplete. Before Exhaust comming into Converter, Air must be mixed with Exhaust completely in Fire room, which must has the sufficient burning space and the wind velocity must be depressed (under 10 m/s converted to the room temperature) . Not only artificial ceramics but also natural materials such as pumice stone and lava can be applied to the catalyst, the former is but easer to be applied. Natural materials include some pollutants such as sulfur, they must be strongly so fixed by the refractory cement that they are not abrased. In order to reduce the flow resistance through the ceramics, such shapes are recommended as plates (including wool plates) or cloth are/is piled up or rolled with spacers, pseud-honeycomb coaxial circles (FIG. 8, 9), cast & nest type (FIG. 10), radial (FIG. 11), sieves (FIG. 12), star like (FIG. 13), etc. The shape of the ceramics in Converter is designed considering droping or removing of fly ash from the ceramics, homogeniously Exhaust blowing to heat exchanging face and the collision of particles and usually selected among or combination of FIG. 10, 11, 12. If the simplest is prefered, then blocks type is selected. Base has also the catalytic effect and is let into Converter as fly ash. In Converter, soot particles are caught, stay and burn out in the long time, NOx is decomposed, Y's are changed into higher oxide and neutralize fixated by Base fly ash and even dilute organic compounds are burned out. Ceramics application for Converter makes a secondary combusting burner unnecessary and this leads also to fuel saving. In many cases of conventional incinerators, a very big combined use burner or a as big secondary combusting burner as the primary combusting burner is used.

In Condenser, H₂O vapor in Exhaust is cooled by Air and Waste and condensed there. When Air temperature is high enough (about higher than 700° C), steam, hot water, warm water, hot air or warm air can be obtained from Utilizer cooling Exhaust.
For the conventional art, Air for complete combustion in excess of the stoichiometry and the Waste including the much H₂O or much Ash component are no other than the auxiliary fuel drunkerd. But for the invention, they are good coolant having large heat capacity.

When Waste have large enough combustion heat, then Utilizer can be placed in wide range from low to high temperature zone (around the outlet of Converter) and large heat can be obtained. When only little amount of heat is obtainable, Utilizer is placed arround the outlet of the scrubber and warm water is obtained. When Air is not hot enough, excess heat utilization causes Air temperature decrease, the lack of Air heating and the decrease of the pollution controling ability of Converter.

In the scrubber, Exhaust is cleaned by the solution. Any type of scrubber is applicable such as a spray packed tower, a net plates tower, a helical flow tower and a beflex tower, but such type is not desirable as has large flow resistance. Partly introduction of the scrubber solution into the condenser increase the efficiency of the heat recovery and lengthen the life span of the solution. Since the condensed H₂ O is hotter than the scrubber solution, its effects of drying Waste and heating Air are also larger. The restraint of mixing with the scrubber solution helps the condensed H₂ O to keep hot. When wet waste is burned and all the solution is let into Condenser, then the condenced H₂ O dilutes the solution and a lot of weak alkaline water must be drained.
When appropriate amount of the solution is let into Condenser and the condensed water is drained from another outlet, then the condensed water becomes almost neutral. The drainage can heat the water for Utilizer or the scrubber circulating solution or Air, beforehand.

As described above, Air is let into Fire room after heated outside of the scrubber, Condenser and Fire room . Waste moves inside of Exhaust duct. Ash moves in the part of Air ducts in the opposite direction of Air flow and is taken out. Micro-fuel and pollution-controle are achieved in this structure when heat is sufficiently exchanged between Incomings and Outgoings, the neutralize fixation effects and Converter works.

When only 0. 5kg/hr auxiliary fuel was supplied to pilot light, beancurd refuse, wasted tofu and sewerage dreg cake, each of which included 80 - 90 % H₂ O, could burn out at the rate of 100 kg/hr in each case. Air temperature was 640° C before the waste introduction, degreased to 635° C just after the introduction and increased to 650° C and became constant at the temperature. The temperatures of both Exhaust and the scrubber solution were under 5° C + the room temperature. Neither smoke nor smell could be recognized. NOx and SOx were not detected by Kitagawa detector. When a extinguishing fire hose composed by urethane and vulcanized rubber was incinerated, Air temperature became higher than 700° C and Exhaust was cooled by Utilizer. However same results about smell, smoke, NOx and SOx were obtained.

This invention can also be applied for the manufactures, the productions of which are the ash, such as cement or quick lime. Even when the Waste does not have enough heat for combustion, saving fuel and pollutin controle are accomplished by using of a little auxiliary fuel or mixing coal powder or tire chips in the Waste. Since Exhaust has almost the room temperature, an incinerating machine can easy be made in closed system.

### Brief Description of Drawings

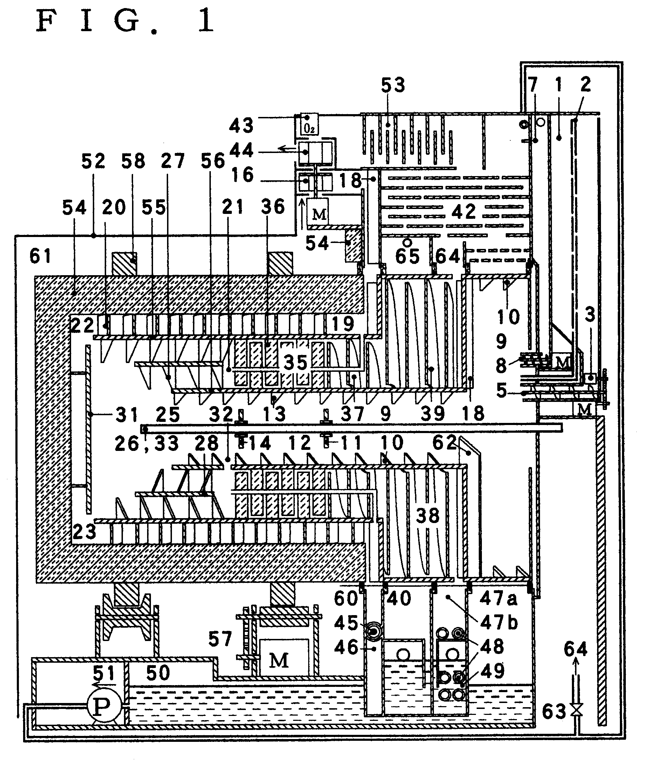

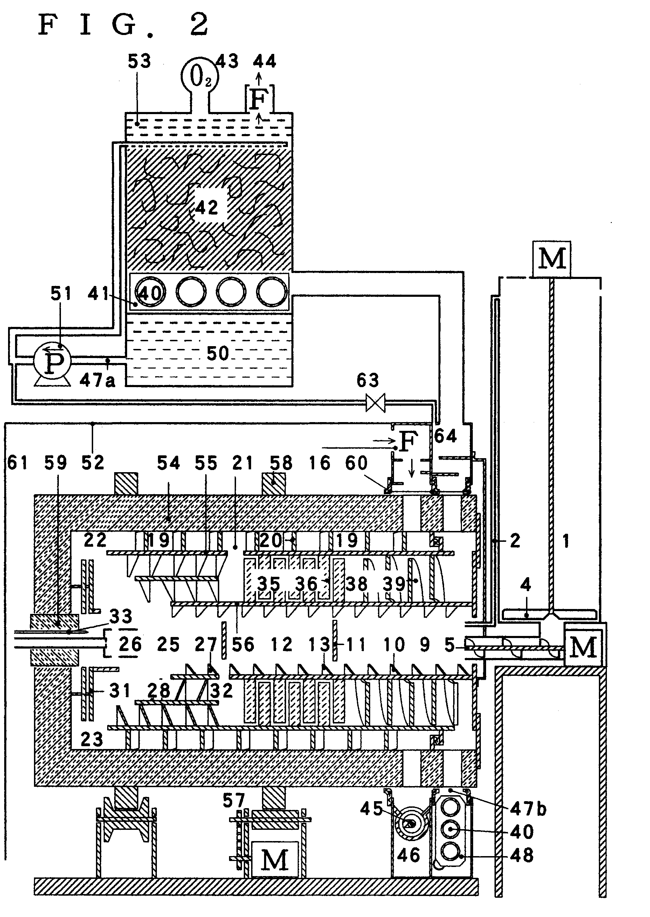

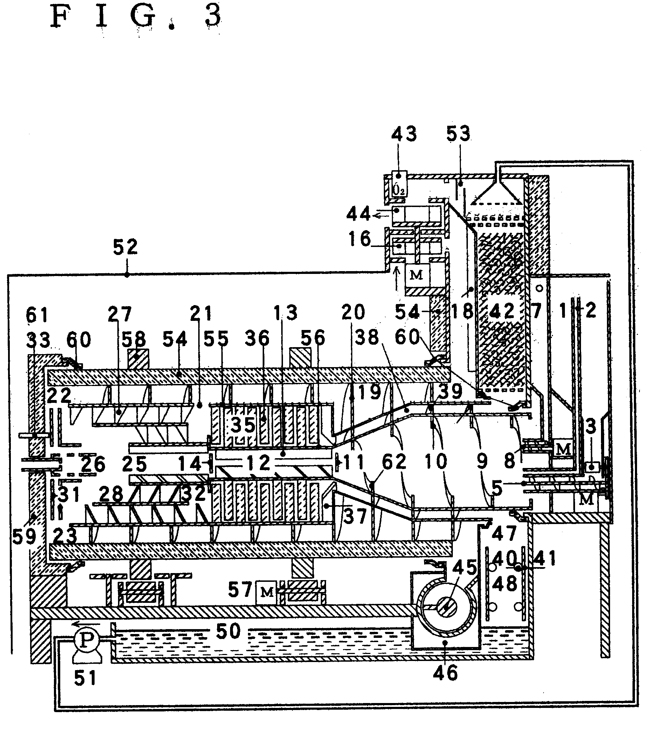

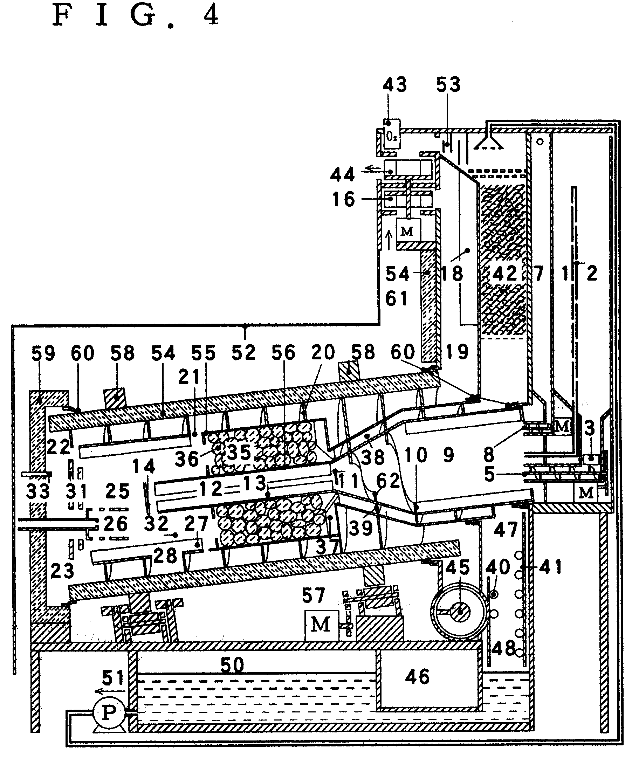

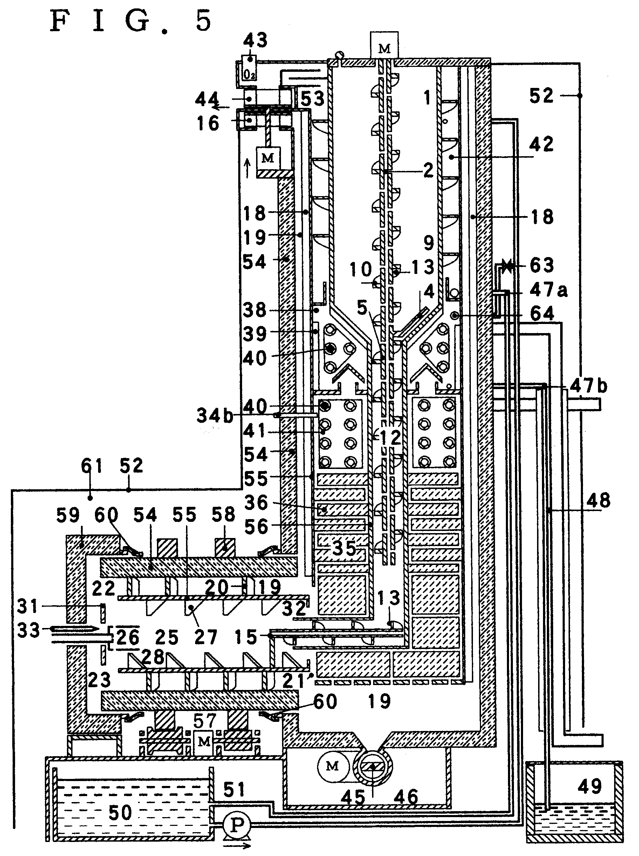

FIG. 1-5. are vertical sections including rotating axis of desirable expamples of the invention using rotary kiln. FIG. 1-4 show the cases that an Air duct, a Drier, a Decomposer, a Fire room, a Converter and a Condenser are incorporated in the rotating body; FIG. 5 shows the case that only part of Air ducts and a Fire room are incorporated in the rotating body. FIG. 1-3 and 5 show the cases that the rotating body lies horizontally; FIG. 4 the case of inclined. FIG. 2 and 5 show the cases that the diameter is constant; FIG. 1 the case of step variation; FIG. 3 and 4 the cases of gradual variation.
FIG. 6 and 7 show the vertical area of the desirable examples of the invention, which do not use rotating body. FIG. 6 shows the machine for the Waste which remains no large combusted residual; FIG. 7 shows the machine for the Waste which remain large combusted residual such as tire or FPR.
FIG. 8-13 show the front viws and right side sections of the Converter, the ceramics of which are plates or cloth.

| Explanation of symbols. | | |
|---|---|---|
| 1 Waste storage tank | 2 bad smmel pipe | 3 crusher |
| 4 stirrer/collecting arm | 5 Waste introducer | 6a Tire holding plate |
| 6b Tire setting frame | 6c residual sttoper | 6d residual storage |
| 7 Base storage tank | 8 Base introducer | 9 Drier |
| 10 Waste transporter | 11 heat reflecter | 12 Decomposer |
| 13 Waste transporter | 14 heat reflecter | 15 waste ouletter |
| 16 ventilator | 17 Ash ventilator | 18 heat transferring fin |
| 19 Air duct | 20 Ash transporter | 21 secondary Air nozzle |
| 22 primary Air nozzle | 23 Ash Air nozzle | 24 Base scatter |
| 25 Fire room | 26 pilot light with igniter | 27 ember transporter |
| 28 cascade steps | 29 Waste scatter | 30 smoke homogenizer |
| 31 heat refrecter | 32 smoke bypass | 33 main temperature sensor |
| 34 secondary temperature sensor | | 34a primary Air temperature |
| 34b steam pipe temperature | 35 Converter | 36 ceramics |
| 37 fly ash remover | 38 Condensor | 39 condenser fin |
| 40 Utilizer pipe | 41 heat accepting plate | 42 scrubber |
| 43 O₂ sensor | 44 Exhaust fan | 45 Ash outletter |
| 46 Ash strage | 47 scrubber solution drain | |
| 47a circulating solution drain | 47b condensed water drain | |
| 48 heat exchanger | 49 drain tank | 50 scrubber solution tank |
| 51 pump | 52 protective wall | 53 demister |
| 54 outer wall (heat insulated) | 55 middle wall | 56 inner wall |
| 57 rotating driver | 58 a wheel tire | 59 pilot light supporter |
| 60 gasket | 61 external Air duct | 62 waste litter |
| 63 neutralizer valve | 64 neutralizer intake | 65 Utilizer intake |
| M motor | F fan | P pump |

### Best Modes of Carrying Out the Invention

It is possible for the invention to deal with various types of Waste and to adopt various types of incinerators devised for various forms or states of Waste as a Fire room. The mode of carrying out the invention adopting a rotary kiln is more effective to reduse the emission of pollutants; that not adopting one is more easily matched with such as heat utilizing or the state of Waste, needs less manufacturing cost per capacity and can be a large equipment.
The modes are described using FIG. 1-7.

FIG. 1 shows the mode of that Air ducts (19), Drier (9), Decomposer (12), Fire room (25), Converter (35) and Condensor (38) are so installed in a holizontally laid rotary kiln, the diameter of which is varied stepwise and with which a scrubber (42) is integrated, that a machine itself acts a counter flow heat exchanger between Incomings and Outgoings. Waste are introduced quantitatively from Waste storage tank (1) through a crusher (3) into Drier by Waste introducer (5) which has a screw blade. Bad smell in Waste tank is inhaled into Drier through a bad smell pipe (2). Base is quantitatively introduced from Base tank (7) into Drier by Base introducer (8). Heat reflecters (11, 14) in Waste tube prevent backfire. A long pipe makes a open window of Fire room omitted, which is inserted from Waste introducing side along the axis of the kiln, and includes a pilot light (26) with an igniter and a temperature main sensor (thermocouple) . Waste transporter (10, 13) and ember transporter (27) are made of dropping flights which have oblique plates.

Ash transporter (20) is made of intermittent multiple spiral plates. Waste lifter (62) is made of a long dropping plate, which has an oblique plate and transports Waste in the diameter varying zone. The inner wall (56) and the middle wall (55) have spiral plates (37, 39), which bail out the condensed water. Only part of the scrubber solution is introduced into Condenser (38) and the scrubber circulating solution drain (47a) is separated from the condensed water drain (47b) where the supplying water to Utilizer is warmed beforehand (48). The warmed water flows outside of the large diameter part of Condensor and is heated (65, 40). Since the large area of condensation increases the efficiency of Utilizer, the mode is suited for Waste which is easily cut small and has wide range of heat of combustion.

FIG. 2 shows the mode of that Air ducts (19), Drier (9), Decomposer (12), Fire room (25), Converter (35) and Condensor (38) are so installed in a holizontally laid rotary kiln and the diameter of which is constant, that a machine itself acts a counter flow heat exchanger between Incomings and Outgoings. A scrubber (42) is independent and neutalalizing solution is regulated by the valve (63) and supplied to Condensor. Waste are quantitatively introduced from the Waste storage tank (1) to Drier by Waste introducer (5). Bad smell in Waste tank is inhaled into Drier through a bad smell pipe (2) . Heat reflecters (11) in Waste tube prevent backfire. The pilot light supporter (59), which includes a pilot fire with an igniter (26) and a main temperature sensor (thermocouple) (33), is inserted along the rotating axis and allowed the axial swing but inhibited the rotation by the universal joint in order to connect with the fixed base. Waste tranporter (10, 13) and ember transporter (27) are made of dropping flights which have oblique plates. Ash transporter (20) is made of intermittet multiple spiral plates. Each of the inner wall (56) and the middle wall (55) has a spiral (37, 39), which bails out the condensed water. The rotating body is the simplest in FIG. 1-4. The mode is suited for dry Waste.

FIG. 3 shows the mode of that Air ducts (19), Drier (9), Decomposer (12), Fire room (25), Converter (35) and Condensor (38) are so installed in a holizontally laid rotary kiln, the diameter of which is varied gradiently and with which a scrubber (42) is integrated, that the machine itself acts a counter flow heat exchanger between Incomings and Outgoings. Waste are quantitatively introduced from Waste storage tank (1) through a crusher (3) into a Drier by Waste introducer (5) which has a screw blade. Bad smell in Waste tank is inhaled into Drier through a bad smell pipe (2). Base is quantitatively introduced from Base tank (7) to Drier by Base introducer (8).
Heat reflecters (11, 14) in Waste tube prevent backfire. The pilot light supporter (59), which includes a pilot light with an igniter (26) and a main temperature sensor (thermocouple) (33), is fixed to the machine base.
Waste tranporter (13) and ember transporter (27) are made of dropping flights which have oblique plates. Ash transporter (20), Waste transporter (10, 62) and Condensor fins (39) are made of single continual spiral. Long dropping plates (37), which have oblique plates, transport fly ash from Converter to the condenser. Condensed water is bailed out by the diameter variation and the spiral plate (39). Since the condensation area is big, the mode is suited for slightly wet Wast.

FIG. 4 shows the mode of that Air ducts (19), Drier (9), Decomposer (12), Fire room (25), Converter (35) and Condensor (38) are so installed in an inclined rotary kiln, the diameter of which is varied gradiently and with which a scrubber (42) is integrated, that the machine itself acts a counter flow heat exchanger between Incomings and Outgoings. Waste are quantitatively introduced into Drier from Waste storage tank (1) through a crusher (3) by a Waste introducer (5) which has a screw blade. Bad smell in Waste tank is inhaled into Drier through a bad smell pipe (2). Base is quantitatively introduced from Base tank (7) to Drier by Base introducer (8). Heat reflecters (11, 14) in Waste tube prevent backfire. A pilot light supporter (59), which includes a pilot light with an igniter (26) and a main temperature sensor (thermocouple) (33), is fixed to the machine base. Ceramic blocks (35) are fixed by the refractory cement including ZnO₂ balloon powder. Waste tranporter (10, 13) and ember transporter (27) are made of dropping plates.
Ash transporter (20), Waste transporter (62) and Condensor fins (39) are made of single continual spiral. Long dropping plates (37), which have oblique plates, removes fly ash from Converter to the condenser. Condensed water is bailed out by the diameter variation and the spiral plate (39). Because hot condensed water makes pool, Waste can be easily dryed. Since the condensation area is big, the mode is suited for wet Wast.

FIG. 5 shows the mode of that only Fire room (25) and part of Air ducts (19) are installed in a holizontally laid rotary kiln, and the rest of Air ducts (19), Drier combined Waste storage tank (1, 9), Decomposer (12), Converter (35), Condensor (38) and a scrubber (42) are fixed to the machine base. All of them are so integrated that the machine itself acts a counter flow heat exchanger between Incomings and Outgoings. Waste is mixed with Base and stirred by a arm (4) in Drier (1, 9), and is quantitatively introduced to Fire room via Decomposer by Waste transporter (5) which has a spiral (10) and a hollow shaft with pores (2), which bypass water vapor and volatile matter such as bad smell in the tank or Decomposer to Fire room . The hollow shaft prevents backfire. A pilot light supporter (59), which includes a pilot light with an igniter (26) and a main temperature sensor (thermocouple) (33), is fixed to the machine base. Ember transporter (27) is made of dropping flights which have oblique plates. Ash transporter (20) is made of intermittent multiple spiral plates. Fly ash considered, the form of the ceramics is made radial in the lower part and cast & nest in the upper part. The mode is suited for Waste which has rather large combustion heat or which is rather hard to cut fine, because heat recovery becomes rather insufficiently.

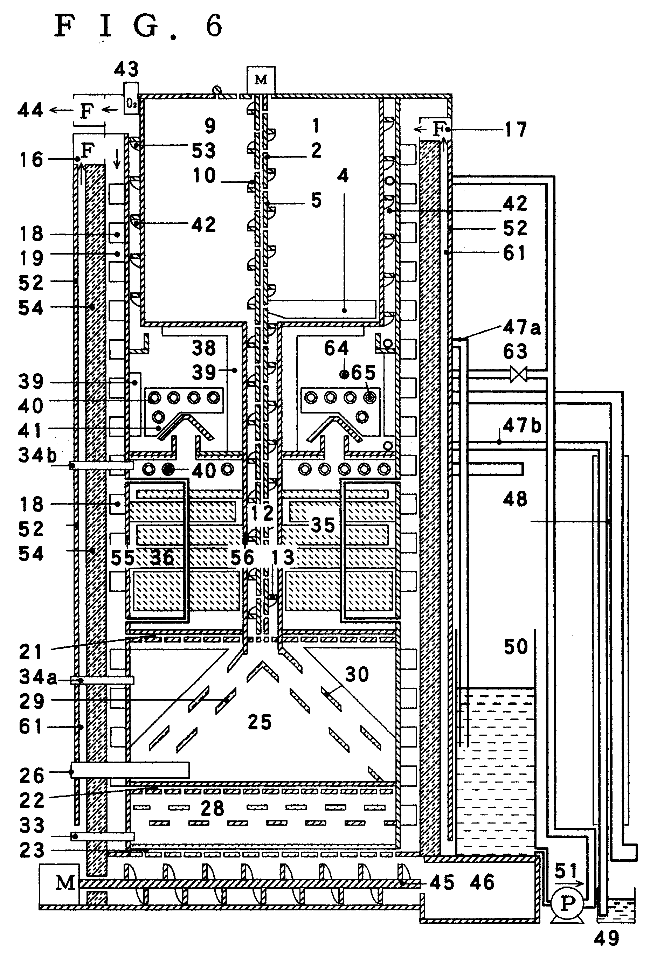

FIG. 6 shows the mode of that Air ducts (19), Drier and Waste storage tank (1, 9), Decomposer (12), Fire room (25), Converter (35), Utilizer, Condensor (38) and A scrubber (42) are so integrated that the machine itself acts a counter flow heat exchanger between Incomings and Outgoings. Waste is mixed with Base and stirred by an arm (4) in Drier (1, 9), and is quantitatively introduced to Fire room via Decomposer by Waste transporter (5) which has a spiral (10), a stirring arm (4) and a hollow shaft with pores (2), which bypass water vapor and volatile matter such as bad smell in Drier or Decomposer to Fire room. The hollow shaft prevents backfire. The stirring arm is so bended that gathers the Waste. When a machine has many Waste introducers, it can be a big or huge equipment. Waste is scattered uniformly in Fire room by a waste scatter (29). Fly ash considered, the form of the ceramics is made radial in the lower part and cast & nest in the upper part. Each of primary Air nozzle (22), secondary Air nozzle (21) and Ash Air nozzle (23) is made of pipes array, on the under side of which pores are so lined that Air can be supplied homogeneously. Large area of condensation increase the efficiency of Utilizer. The mode is suited for such Waste as has middle or large combustion heat, leaves little ash, produces little pollutants and is easy or rather difficult to cut small.

FIG. 7 shows the mode that is suited for such dry Waste as has big heat of combustion and as remains large size of residuals but remains little ash. Waste such as tire (Tire) needs so much cost to cut, because the cutter is very expensive, that both quantitative supply of Waste and takeout of residuals are difficult. Therefore Ash, residuals and waste are excluded from the object of heat exchange with Air and Exhaust. Air ducts, Decomposer (12), Fire room (25), Converter (35), Condensor (38) and a scrubber (42) are so integrated that the machine itself acts a counter flow heat exchanger between Air and Exhaust. All of 6a, 6b and 6c are set in the solid line described place. Tire setting frame (6b) is pulled out to the dashed line and Tire holding plate (6a) is also pulled out to the dashed lines. Then Tire droppes into Tire setting frame from Tire storage (1). Tire holding plate is returned the initial position immediately, and Tire setting frame is returned and Tire is set in Decomposer.
Tire is quantitatively decomposed and burnes slowly in Decomposer in Ash Air reguratecl Ash ventilator (17) and the decomposed/vaporlized gas burnes in Fire room. Tire burns out and the residuals are left in the frame (6b). Tire stopper (6c) is pulled out to the dashed line. Tire setting frame is then pulled to the dashed line. The residuals droppes into a residual storage (6d). All are returned to the initial position describing as the solid line. Tire must be introduced into Decomposer after primary Air temperature (34a) becomes 600° C by initial heating. In Decomposer Tire is slowly decomposed, vaporized and combusted and Ash and embers drop onto cascade steps (28) and large size of residuals are left in Decomposer. Embers are completely combusted in cascade steps, where a pilot light exists and hot fresh Air is supplied. The leakage of smoke from a machine is prevented by the difference of the capacity between ventilators (16, 17) and Exhaust fan (44) even when Tire setting frame is pulled out and the inside of the machine is exposed. Such gases, as am produced when Tire toutchs the hot frame, do not leak, because the air inside the protective wall (52) is inhaled to the machine by ventilator (16). The machine which has several sets of Tire introducer (6a, 6b, 6c, 6d) can stabilize the temperature in Decomposer and has high efficiency of handling. The Base is quantitatively supplied into Fire room (25) from Base storage tank (7) by plural number of Base supplier (8). Base is scattered homogeniously in Fire room and made fry ash. Each of a primary Air nozzle (22), a secondary Air nozzle (21) and an Ash Air nozzle (23) is made of pipes array, on the under side of which pores are so lined that Air can be supplied homogeneously.

### Indudtrial Applicability.

The machine concerning the invention needs very little amount of auxiliary fuel, emits only very low level of pollutants, and can be adopted to various types of wastes, such as rubber and plastics which have very large heat of combustion, sewerage dreg cake which includes much water and is difficult to bum or ignite, tire and FRP which remain large size of residuals. The invention is applicable to cement or quick lime production.

## Claims

1. A wastes incinerator machine which so comprises (an) air duct (s),
(a) decomposing chamber (s), a combusting chamber, a catalytic converter and a water vapor condensor, that a counter flow heat exchange is effected between the air and the exhaust gas.

2. An incinerator, in and/or out of which wastes is mixed with base and which so comprises (an) air duct (s), (a) decomposing chamber (s),
a combusting chamber, a catalytic converter and a water vapor condensor,
that a counter flow heat exchange is effected between the air and the exhaust gas, and
that the heat exchaned high temperature air flows in the opposite didection of the ash motion and contacts ash.

3. An incinerator, in and/or out of which wastes is mixed with base and which so comprises (an) air duct(s), (a) decomposing chamber(s),
a combusting chamber, a catalytic converter and a water vapor condensor,
that a counter flow heat exchange is effected between the air and the exhaust gas,
that the heat exchaned high temperature air flows in the opposite didection of the ash motion and contacts ash,
that all or part of air duct (s) is/are placed inside the heat insulated outer wall,
that all or part of scrubber sulution is introduced into the water vapor condensor, and
that the outlet side of the catalytic converter is coolled by a heat ulilizing apparatus.

4. An incinerator, in and/or out of which wastes is mixed with base and which so comprises (an) air duct (s), a drying chamber, a decomposing chamber, a combusting chamber, a catalytic converter and a water vapor condensor in a rotating body,
that a scrubber and a heat utilizing apparatus are integrated with them,
that the exhaust gas and ash can exchange heat with the air and wastes in counter flow heat exchange method,
that the air flows inside the heat insulated outer wall,
that all or part of scrubber sulution is introduced into the water vapor condensor.

5. An incinerator, in and/or out of which wastes is mixed with base and which so comprises (an) air duct (s), a drying chamber, a decomposing chamber, a combusting chamber, a catalytic converter, a water vapor condensor and a pilot light for the initial heating and maintaining the flame in a rotating body,
that a scrubber and a heat utilizing apparatus are integrated with them,
that the exhaust gas and ash can exchange heat with the air and wastes in counter flow heat exchange method,
that the air flows inside the heat insulated outer wall,
that all or part of scrubber sulution is introduced into the water vapor condensor,
that the outlet side of the catalytic converter is coolled by a heat ulilizing apparatus, and
that the high temperature air flows to contact ash.
